Europäisches Patentamt

European Patent Office

Office européen des brevets

(19)

(11) Publication number: **0 237 192 B1**

(12) EUROPEAN PATENT SPECIFICATION

(45) Date of publication of patent specification: **25.03.92**   (51) Int. Cl.⁵: **B29C 65/16**, B23K 26/06

(21) Application number: **87301168.8**

(22) Date of filing: **11.02.87**

(54) **A method and a device for welding together plastic or plastic covered surfaces.**

(30) Priority: **20.02.86 NO 860643**

(43) Date of publication of application:
**16.09.87 Bulletin  87/38**

(45) Publication of the grant of the patent:
**25.03.92 Bulletin  92/13**

(84) Designated Contracting States:
**AT BE CH DE ES FR GB GR IT LI NL SE**

(56) References cited:
**EP-A- 0 147 833**
**FR-A- 2 118 531**
**US-A- 3 016 085**
**US-A- 3 408 242**

**MACHINE DESIGN, vol. 50, no. 25, November 1978, pages 110-115; J.K. KROUSE: "Laser"**

(73) Proprietor: **Elopak A/S**

**N-3430 Spikkestad(NO)**

(72) Inventor: **Dyre-Hansen, Hans**
**Nedre Gleinasen 1**
**N-3440 Royken(NO)**
Inventor: **Thorstensen, Bernt**
**Sarabratveien 9D**
**N-0687 Oslo 6(NO)**

(74) Representative: **Cline, Roger Ledlie et al**
**EDWARD EVANS & CO. Chancery House**
**53-64 Chancery Lane**
**London WC2A 1SD(GB)**

## Description

The invention relates to a method and a device for welding together plastic or plastic covered surfaces by the aid of laser beam heating.

Containers intended for liquid comestibles, e.g. dairy produce, beverages, or juice, are conventionally manufactured from thermoplastic covered cardboard, but they may also be manufactured entirely from cardboard. Such containers are manufactured of a plane blank provided with folding indications in the shape of embossed lines, and said blank is commonly folded into a rectangular tube shaped body which is closed in a suitable manner at its top and bottom. In assembling the blank to a tube shaped body by use of only one starting blank a flap is joined with a side edge area on a side surface, and it is of great importance to achieve a completely tight seal. The conventional manner of carrying out such joining or sealing is by the aid of glue or by heating to make the plastic surfaces melt together.

If a seam without any leakage is to be granted it is, however, difficult to carry out this technique rapidly and efficiently on a production line. A difficulty arising in this connection is that both surfaces to be mutually contacted should be quite uniformly heated in order to obtain a uniform joining. This also being a case of opposed surfaces it may be necessary to keep said surfaces at a relatively large mutual distance to be able to exert the necessary influence of heat to achieve the desired heating. There will then be a hazard of cooling said surfaces in an uncontrolled manner before they are joined.

It is an object of the present invention to provide a method and a device permitting two plastic or plastic covered surfaces to be welded together without encountering the above mentioned disadvantages and by which entirely constant heating of both opposite surfaces is achieved.

This object is achieved by use of a heating device in the shape of a laser, and the invention is characterized by the features appearing from the claims.

In European Patent Application 0147333 use of laser beams for melting or plasticising two seam surfaces to be welded is disclosed. A device is disclosed by the aid of which a laser beam is split permitting simultaneous heating to two surfaces areas by the same beam while being conveyed along a line path. In another embodiment two surfaces to be welded together are provided at a mutual angle, and the laser beam is made to radiate into said angle heating and plasticising said surfaces so that they can melt together. This last mentioned method which is especially suited for surfaces containing a metal film in their composition will cause reflections between said lateral surfaces extending in a mutually inclined manner resulting in unequal heating and uncertainty as regards the final tightness of the seam. With the present invention this problem is avoided by use of the reflecting surfaces located between the surfaces to be welded together and those surfaces are pressed together while continuing to be conveyed along said line. In the same manner as in the above mentioned European application an unfocused laser beam can be used.

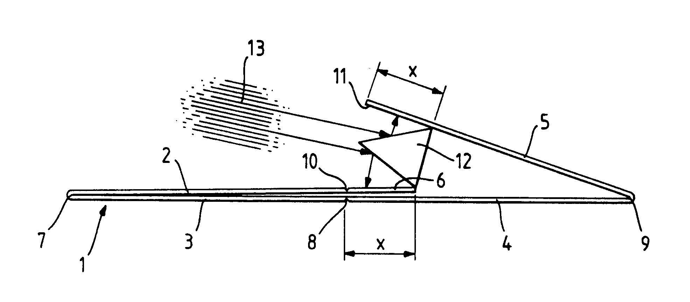

Further features of the intention will appear from the following description of an embodiment diagrammatically shown in the drawing and in a side elevation illustrating the principle of laser beam heating via a reflector means of two surface to be melted together.

The drawing shows an end elevation of a blank for a thermoplastic covered container that is to be joined along one side face. The cardboard container may be covered by a thermoplastic, e.g. polyethylene, on its outside faces and may, if desired, also comprise a metal film, e.g. an aluninium film. In a first assembling step of the container the blank, designated 1 in the figure, is folded to make two and two side faces mate. The desired rectangular container has four side faces 2, 3, 4, and 5. Additionally, said blank is provided with a side flap 6 which is to form the seam-connection with the end portion of side face 5. The side wall portions of the container are separated by grooved or embossed lines 7, 8, 9, and 10. At the phase of manufacture shown in the drawing said cardboard blank is folded at embossed lines 7 and 9, so that faces 2 and 3 mate, whereas faces 4 and 5 enclose an acute angle. The container blank may either have the form of separate blanks for each container, supplied one after the other, or in the shape of a web intended for being cut transversally, before bottom and top portions are joined. Such a process of manufacture of containers is commonly known technology.

In order to achieve welding of the side edge areas said container blank is conveyed in the position as shown in the figure in a lateral direction, i.e. transversal to the paper plane, over a reflector means 12, the container blank 1 being provided in such a relation to reflector means 12 that said means 12 will limit the two surfaces to be welded together, i.e. the interior face area 11 of surface 5 and seam flap 6 both having a length indicated by x in the figure. To heat said faces a laser beam 13 is emitted into reflector means 12 which in the shown embodiment is a reflector prism that is symmetrically arranged, so that the laser beam is reflected equally to both sides towards the faces to be melted together. This occurs continuously at the same time as blank 1 is conveyed on in a lateral direction. By the aid of a correct section of the intensity of said laser beam in relation to the length of reflector prism 12 plasticisation or melting of said two side faces is achieved, which faces can be pressed together in a known manner after having left the area of said reflector prism to form a homogeneous and good melted connection or weld.

Because of the high intensity of said laser beam heating will be very quick so that the process of melting together can be carried out on a working path feeding blanks 1 at comparatively high speed.

It should be mentioned that reflector means 12 does not have to be a prism, but can be designed in a desired manner the only consideration being that said laser beam must be equally divided between both faces to be plasticized. Necessary adjustments will be obvious to those skilled in the art.

## Claims

1. A method for welding together plastic or plastic covered surfaces (6, 11) by the aid of a laser beam heating along a line seam, reflecting the laser beam with a pair of reflecting surfaces respectively equally to said surfaces, conveying the surfaces along the line of the seam past the reflecting surfaces and subsequently pressing together the melted surfaces together after having left the reflector surfaces (6, 11), characterised in that the reflecting surfaces are located between said surfaces (6, 11) and the melted surfaces are pressed together while continuing to be conveyed along said line.

2. A method as claimed in Claim 1 wherein the surfaces (6, 11) are conveyed while inclined to each other at an acute angle (9), the reflector (12) being arranged to direct the laser beam to only a portion (x) of said surfaces.

3. A device for welding together plastic or plastic covered surfaces (6, 11) by the aid of a laser beam heating along a line seam, comprising a laser beam emitter (13), a reflector (12) with a pair of reflecting surfaces for reflecting the beam from the laser equally to the respective surfaces, a conveyor for conveying the surfaces past said reflector means and means for pressing together said melted surfaces characterised in that the reflecting surfaces are located between said surfaces (6, 11) and said means for pressing together is arranged to act on said surfaces while being conveyed by said conveyor.

4. A device as claimed in Claim 3 wherein said conveyor is arranged to convey the surfaces (6, 11) inclined towards each other at an acute angle (9) and said reflector is arranged to direct the laser beam to only a portion (x) of said surfaces (6, 11).

5. A device as claimed in Claim 3 or Claim 4 wherein said reflector (12) is a prism.

## Revendications

1. Un procédé pour la soudure de surfaces en matières plastiques ou surfaces revêtues de matières plastiques (6, 11) par chauffage au moyen d'un faisceau laser suivant un tracé linéaire déterminé, réfléchissant le faisceau laser sur deux surfaces réfléchissantes et réparti de manière parfaitement égale entre lesdites surfaces, présentant les surfaces proprement le long de la ligne du joint à souder au-dessus des surfaces réfléchissantes et, ensuite, pressant l'une contre l'autre les surfaces fondues ensemble, après la sortie des zones réfléchissantes (6, 11), caractérisé en ce que les surfaces réfléchissantes se situent entre lesdites surfaces (6, 11) et que les surfaces fondues sont pressées l'une contre l'autre tout en continuant à avancer le long de ladite ligne.

2. Un procédé suivant la revendication 1, dans lequel les surfaces (6, 11) sont avancées, dans un plan incliné l'une par rapport à l'autre sous un angle aigu (9), tandis que le réflecteur (12) est disposé de manière à diriger le faisceau laser uniquement dans la zone (x) desdites surfaces.

3. Un appareil pour la soudure de surfaces en matières plastiques ou surfaces revêtues de matières plastiques (6, 11) par chauffage au moyen d'un faisceau laser suivant une ligne de jointure à souder, comprenant un émetteur de faisceau laser (13), un réflecteur (12) avec une paire de surfaces réfléchissantes pour réfléchir le faisceau du laser de manière égale sur les surfaces respectives, un transporteur pour amener les surfaces par dessus dudit moyen réflecteur et un moyen pour presser l'une contre l'autre lesdites surfaces fondues, caractérisé en ce que les surfaces réfléchissantes sont situées entre lesdites surfaces (6, 11) et que ledit moyen pour presser les surfaces l'une contre l'autre est disposé de manière à agir sur lesdites surfaces tandis qu'elles sont acheminées par ledit transporteur.

4. Un appareil suivant la revendication 3, dans lequel ledit transporteur est disposé pour acheminer les surfaces (6, 11) l'une vers l'autre sous un angle aigu (9) et ledit réflecteur est disposé de manière à diriger le faisceau laser uniquement dans la zone (x) desdites surfaces (6, 11).

5. Un appareil suivant la revendication 3 ou la revendication 4, dans lequel ledit réflecteur (12) est un prisme.

**Patentansprüche**

1. Verfahren zum Zusammenschweißen von Kunststoff oder Kunststoff-bedeckten Oberflächen (6,11) mit Hilfe eines Laserstrahls, der entlang einer Liniennaht erwärmt, Reflektieren des Laserstrahls mit einem Paar reflektierender Oberflächen jeweils gleichmäßig zu diesen Oberflächen, Befördern der Oberflächen entlang der Linie der Naht vorbei an den reflektierenden Oberflächen und daraufhin Zusammenpressen der geschmolzenen Oberflächen, nachdem sie die Reflektoroberflächen (6,11) verlassen haben, dadurch gekennzeichnet, daß sich die reflektierenden Oberflächen zwischen den Oberflächen (6,11) befinden und die geschmolzenen Oberflächen zusammengepreßt werden, während sie weiterhin entlang der Linie befördert werden.

2. Verfahren nach Anspruch 1, wobei die Oberflächen (6,11) befördert werden, während sie zueinander unter einem spitzen Winkel (9) geneigt sind, wobei der Reflektor (12) angeordnet ist, um den Laserstrahl zu nur einem Abschnitt (x) der Oberflächen zu lenken.

3. Vorrichtung zum Zusammenschweißen von Kunststoff oder Kunststoff-überzogenen Oberflächen (6,11) mit Hilfe eines Laserstrahls, der entlang einer Liniennaht erwärmt, wobei die Vorrichtung aufweist: einen Laserstrahlaussender (13), einen Reflektor (12) mit einem Paar reflektierender Oberflächen zum Reflektieren des Strähles von dem Laser gleichmäßig zu den jeweiligen Oberflächen, eine Fördereinrichtung zum Fördern der Oberflächen wobei an der Reflektoreinrichtung und eine Einrichtung zum Zusammendrücken der geschmolzenen Oberflächen, dadurch gekennzeichnet, daß die reflektierenden Oberflächen sich zwischen den Oberflächen (6,11) befinden und die Einrichtung zum Zusammendrücken angeordnet ist, um auf die Oberflächen einzuwirken, während sie durch die Fördereinrichtung befördert werden.

4. Vorrichtung nach Anspruch 3, wobei die Fördereinrichtung angeordnet ist, um die Oberflächen (6,11) zu befördern, welche zueinander unter einem spitzen Winkel (9) geneigt sind und der Reflektor angeordnet ist, um den Laserstrahl nur zu einem Abschnitt (x) der Oberflächen (6,11) zu lenken.

5. Vorrichtung nach Anspruch 3 oder Anspruch 4, wobei der Reflektor (12) ein Prisma ist.